# EUROPEAN PATENT APPLICATION

(11) **EP 2 698 288 A1**
(43) Date of publication of application: **19.02.2014**
(21) Application number: 12005873.0
(22) Date of filing: 14.08.2012
(51) Int. Cl.: B60R 25/04, B60R 11/02, G08G 1/123

(54) **Mobile security system and method for a vehicle**

(71) Applicant: Lite-On It Corporation, Taipei (TW)
(72) Inventor: Graf, Stefan, 35578 Wetzlar (DE); Gueths, Torsten, 61231 Bad Nauheim (DE)
(74) Representative: Müller-Boré & Partner Patentanwälte PartG mbB

(57) **Abstract**

A mobile security system for use in a vehicle is provided. A mobile phone is coupled to the engine immobilization circuitry that of the vehicle. Upon receiving an authentification generated by the mobile phone after the mobile phone is fixed to the vehicle's infrastrucure, the authentification disables the engine immobilization circuitry to start the vehicle. Furthermore, the mobile phone executes an emergency function if an emergency situation happens. Thus, a reliable and quick response of rescue force mobile security system is provided.

## Description

### BACKGROUND OF THE INVENTION

### 1. Technical Field

The present invention relates to the field of security systems. More particularly, the present invention relates to a security system where mobile phone is configured to the vehicle's infrastructure and coupled to an immobilizer function to ensure that the car system is correctly connected to the mobile phone.

### 2. Description of Related Art

Systems for generating and transmitting emergency signals are known in the prior art. For example, the OnStar system service is exclusively available in automobiles manufactured by General Motors Corporation. Such systems include a cellular communication device embedded within a vehicle. The cellular communication device may include a speaker, microphone and have global positioning capabilities, such as a global positioning system (GPS). Upon certain predefined circumstances, the cellular communication device may be configured to contact the central human operator, and the driver of the vehicle can communicate with the central human operator using the microphone and speaker. Or, the cellular communication device includes an emergency contact device for dialing the emergency number and transmitting a position signal representing the current position of the vehicle upon activation by car alarm system, airbag deployment detector and the like.

However, a driver must own an automobile embedded the cellular communication device, and pay a significant fee for subscription such services. Thus, there sill remains a need for an emergency system that is inexpensive and provides maximum safety.

### SUMMARY OF THE INVENTION

The present invention relates to a mobile security system for use in a vehicle, comprising: a mobile phone, which comprises a processor for generating an authentification, and a coupling connector; and an engine immobilization circuitry operatively coupled to the engine of the vehicle, said engine immobilization circuitry being operative to receive the authentification transmitted by the coupling connector, and the authentification disables the engine immobilization circuitry to start the vehicle.

Another aspect of the invention is to provide a method for combining an immobilizer funcion of a vehicle with a moblie phone and automatically initiating a moblie phone emergency function in response to an emergency situation, comprising: (a) securing a mobile phone in the vehicle; (b) generating an authentification by the mobile phone; (c) transmitting the authentification to disable an engine immobilization circuitry which operatively coupled to the engine of the vehicle; (d) starting the vehicle; (e) generating an activating signal by a crash notification sensor installed in the vehicle or a g-sensor installed in the mobile phone upon a measured indication of at least one of a predefined impact to the vehicle, an enviromental change or an airbag deployment within the vehicle; and (f) initiating at least one preprogrammed emergency function of the mobile phone.

Therefore, by combination of the immobilizer funciton with the mobile phone, it will be ensured that when accidents happens, there will be established a 100% reliable connection of the mobile phone to the vehicle. In case of an accident, the g-sensor and/ or the crash notification sensor will generate an activation signal to initiate at least one preprogrammed emergency function of the mobile phone.

To improve understanding of the different aspects of the disclosure, the techniques employed in the present invention to achieve the foregoing objectives, characteristics and effects thereof are described hereinafter by way of examples with reference to the accompanying drawings.

### BRIEF DESCRIPTION OF THE DRAWINGS

Fig. 1 shows a schematic diagram of an exemplary embodiment of the mobile security system of the present invention.
Fig. 2 shows an isometric view of the stay-in-place device for placing the mobile phone.
Fig. 3 shows a flow chart illustrating an exemplary method for combining an immobilizer funcion of a vehicle with a moblie phone and automatically initiating a moblie phone emergency function in response to an emergency situation.

### DETAILED DESCRIPTION OF THE INVENTION

In the following detailed description, only certain exemplary embodiments of the present invention are shown and described, by way of illustration. As those skilled in the art would recognize, the described exemplary embodiments may be modified in various ways, all without departing from the spirit or scope of the present invention. Accordingly, the drawing and description are to be regarded as illustrative in nature, and not restrictive.

The present invention provides a mobile security system for use in a vehicle, comprising: a mobile phone, which comprises a processor for generating an authentification, and a coupling connector; and an engine immobilization circuitry operatively coupled to the engine of the vehicle, said engine immobilization circuitry being operative to receive the authentification transmitted by the coupling connector, and the authentification disables the engine immobilization circuitry to start the vehicle.

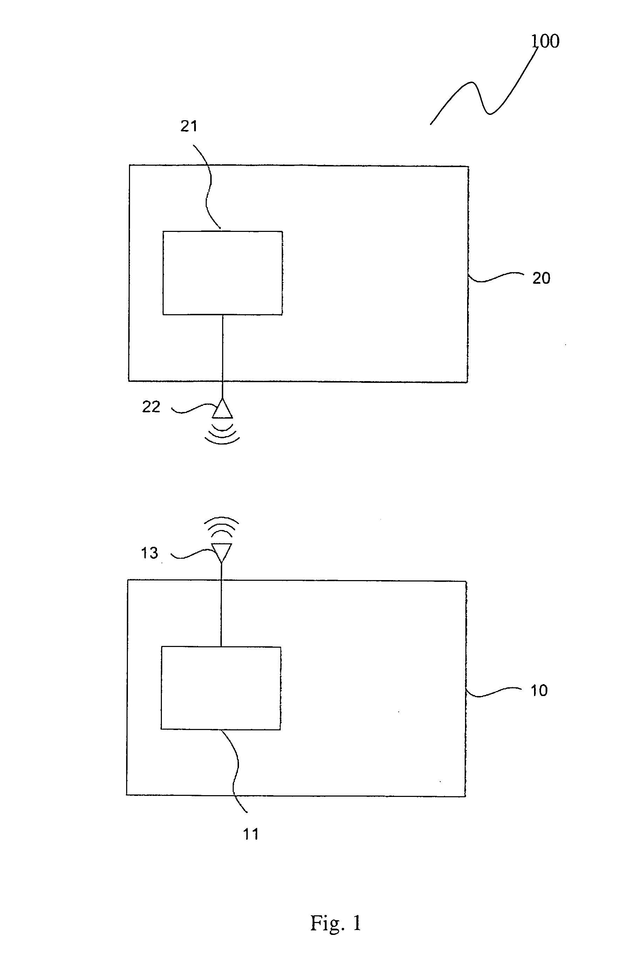

Fig. **1** is a block diagram illustrating an exemplary mobile security system 100. The mobile security system **100** is configured to be positioned within a vehicle, such as an automibile, a motorcycle, a watercraft and any other form of transportation that would allow the mobile security system **100** to funcion as described herein.

In an exemplary embodiment, the mobile security system **100** comprises a mobile phone **20** and an engine immobilization circuitry **10.** The mobile phone **20** and the engine immobilization circuitry **10** may be commuicatively coupled using a coupling connector **22** of the mobile phone **20** using wireless technology, such as radio frequency identification (RFID), Bluetooth, near-field communication device, or any other suitable wireless communication technology that allows system **100** to function as described herein. Typically, the mobile phone **20** includes a memory device (not shown); a transceiver (not shown); an input device(not shown), such as a microphone, a keypad, and a digital camera; an output device (not shown), such as a speaker and a display screen; a wireless communication device (not shown), and a global positioning system (GPS) device (not shown), all coupled to a mobile phone processor **21.** The term "processor **21"** refers to central processing units, microprocessors, microcontrollers, reduced instruction set circuits (RISC), application specific integrated circuits (ASIC), logic circuits, and any other circuit or processor capable of executing the functions described herein.

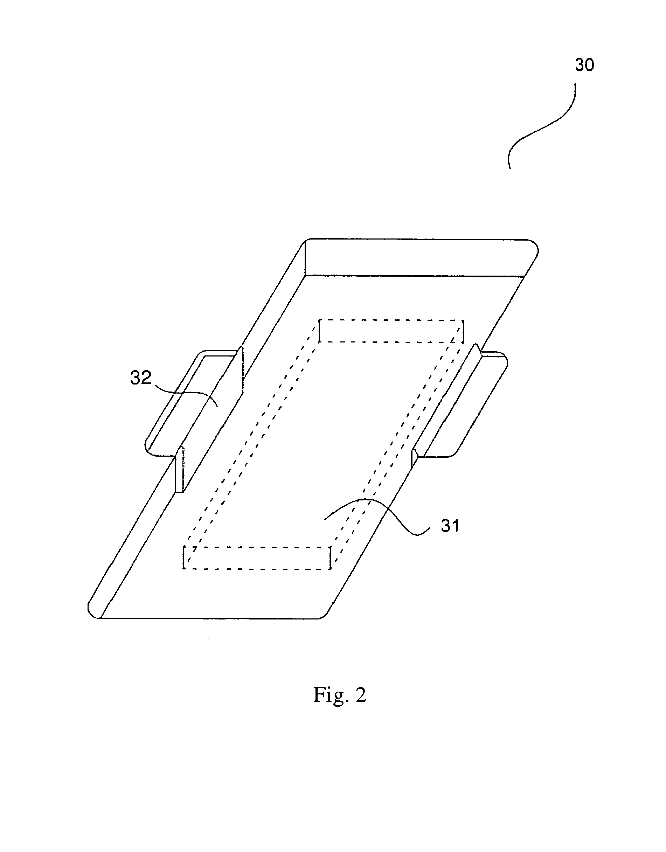

In the exemplary embodiment of the mobile security system **100,** the processor **21** of the mobile phone **20** generates an authentification, and transmits the authentification via the coupling connector **22** to the engine immobilization circuitry **10.** The engine immobilization circuitry **10** being operative to receive the authentification transmitted by the coupling connector 13, and the authentification disables the engine immobilization circuitry **10** to start the vehicle. Further referring to Fig. **2****,** the mobile security system **100** further comprises a stay-in-place device 30. The stay-in-place device 30 is a placing slot **30,** for example, in this embodiment. Other devices used to secure the mobile phone 20 are also applicable, for example, an elastic band, a sliding slot, etc. The placing slot **30** is for securing the mobile phone **20.** The placing slot **30** comprises a pair of clamps **32** located at two sides of the placing slot 30 to fix the mobile phone **20** securely. In addition, the placing slot **30** further comprises a wireless charging device **31** coupled to the mobile phone **20** to ensure that the mobile phone **20** is always charged. In a preferrably embodiment, the processor **21** of the mobile phone **20** will generate the authentification only if the mobile phone 20 is secured by the clamps **32** of the placing slot **30.** Thus, the immobilizer CPU **11** of the engine immobilization circuitry **10** upon receiving the authentification through a coupling connector **13,** operates in its normal operating mode. Namely, the authentification generated by the mobile phone **20** is used for disarming a vehicle installed ignition interlock or used for starting a vehicle engine. If the mobile phone **20** is not secured by the the clamps **32** of the placing slot **30,** then it would not generate the authentification, and the immobilizer CPU **11** will immobilize the vehicle ignition, or fuel pump circuitry, so that the vehicle cannot be started. In such way, functionality of the mobile security system **100** depends on that the mobile phone **20** is fixed and connected with the vehicle.

In the exemplary embodiment, the mobile security system **100** further comprises a crash notification sensor installed in the vehicle for generating an activation signal to active the mobile phone **20** executing at least one preprogrammed emergency function. Alternatively, the crash notification sensor can be substituted by the g-sensor included in the mobile phone **20.** Sensors measure conditions that may indicate that the vehicle is involved in a situation that would warrant contacting a provider of emergency services, for example, a vehicle impact, collision, or other type of accident that causes a rapid deceleration of the vehicle. Sensor may include an accelerometer configured to measure a deceleration of the vehicle and/or an orientation of the vehicle. If the deceleration indicates a rapid deceleration, sensors generate an activation signal to the mobile phone **20.** Sensors may also measure changes in environmental conditions but not limited to changes in air pressure and changes in humidity level. Such environmental conditions may provide an indication that the vehicle is involved in an emergency situation. It is to be understood that there are various types of sensors generating different types of activation signals can be used. For example, an airbag system transmits an airbag deployment signal via wireless communication to the mobile phone **20** can also activate the mobile phone **20** initiating at least one preprogrammed emergency function.

Upon receiving the activation signal, the mobile phone **20** initiates at least one preprogrammed emergency function of the mobile phone **20.** The emergency functions are preprogrammed functions stored in memory device. The emergency functions include, for example, without limitation, dialing a preprogrammed emergency telephone number; transmitting an emergency message to an emergency service provider; sending a location from the GPS device installed in the mobile phone **20;** recording audio, still images or video using the mobile phone **20.** The emergency service provider may include a fire department, a police department, and/or a hospital and the like. The mobile phone **20** may additionally record images and sounds of what occurs directly after an accident so as to provide the authorities with information to help in the process of finding out what happened and who was responsible. For example, upon receipt of the activation signal, the mobile phone **20** dials a phone call to 911, and records sounds, pictures, and/or video. More specifically, the mobile phone **20** may take pictures periodically, for example, every two to five seconds, and records sounds continuously. After the mobile phone **20** is connected to the emergency service provider, the provider will be able to pinpoint the location of vehicle using GPS device in the mobile phone **20.**

In the above mentioned mobile security system **100,** the combination of the immobilizer function and initialing emergency function of the mobile phone **20** is programmed as an application software (APP). The term "application software," also know as "APP", refers to computer software designed to help the user to perform specific tasks, and can be download via the world wide web and installed in the mobile phone **20.**

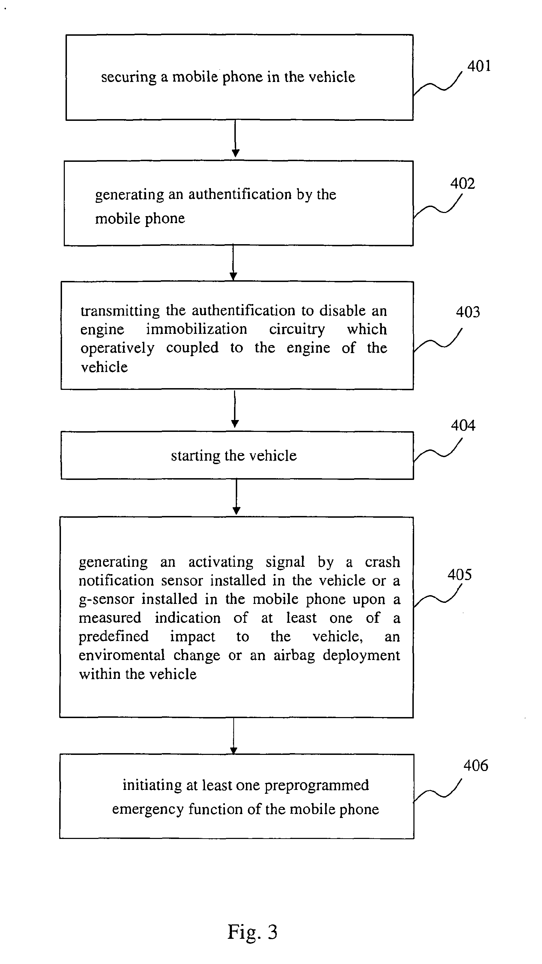

Fig. 3 shows a flow chart illustrating an exemplary method for combining an immobilizer funcion of a vehicle with a moblie phone and automatically initiating a moblie phone emergency function in response to an emergency situation. In the exemplary embodiment, the method comprises: securing a mobile phone in the vehicle **401;** generating an authentification by the mobile phone **402;** transmitting the authentification to disable an engine immobilization circuitry which operatively coupled to the engine of the vehicle **403;** starting the vehicle **404;** generating an activating signal by a crash notification sensor installed in the vehicle or a g-sensor installed in the mobile phone upon a measured indication of at least one of a predefined impact to the vehicle, an enviromental change or an airbag deployment within the vehicle **405;** initiating at least one preprogrammed emergency function of the mobile phone **406.**

In the exemplary method of the invention, the mobile phone is secured in the vehicle via a placing slot **30** (shown in Fig. **2****)** and the placing slot **30** further comprises a pair of clamps **32** located at two sides of the placing slot 30 to fix the mobile phone **20** securely. In addition, the placing slot **30** further comprises a wireless charging device **31** coupled to the mobile phone **20** to ensure that the mobile phone **20** is always charged.

The innovation of functional blocks **401** to **404** of the method of the present invention ensures that the mobile phone will be secured in a way that it is 100% fixed, connected and charged. That is, the vehicle cannot be driven without a proper placement of the mobile phone, and the vehicle can always connect to the mobile phone even an emergency situation happens.

As shown in function block **405,** the crash notification sensor or the g-sensor included in the mobile phone measures conditions that may indicate that the vehicle is involved in a situation that would warrant contacting a provider of emergency services, for example, a vehicle impact, collision, airbag deployment, or other type of accident that causes a rapid deceleration of the vehicle. The activation signal generated by the crash notification sensor or the g-sensor may transmit to the mobile phone using wireless technology. Upon receiving the activation signal, as shown in function block **406,** at least one preporgrammed emergency fuction is initiated. Initiating at least one preprogrammed emergency function of the mobile phone may include, without limitation, automatically initiating a phone call to an emergency service provider by accessing a phone number associated with the emergency service provider stored in the mobile phone, automatically initiating a phone call to an emergency contact by accessing a phone number associated with the emergency contact stored in the mobile phone, providing a location of the mobile phone to at least one of the emergency service provider and the emergency contact, recording audio, recording video, or capturing still images. As described above, initiating at least one preprogrammed emergency function of the mobile phone in response to the activation signal facilitates emergency requests and accident documentation, potentially at times when occupants of a vehicle are not able to perform such activities.

Described herein are exemplary systems and methods for combining an immobilizer function of a vehicle with a mobile phone and automatically initiating a mobile phone emergency function in response to an emergency situation. More specifically, the systems and methods described herein provide a cellular phone with a combination of an immobilizer function and the cellular phone is preprogrammed to perform at least one emergency function upon receipt of the activation signal generated via various sensors. The systems and methods provide this emergency service to customers without a subscription in addition to their personal cellular phone subscription, and also provide a cheap emergency service to owners of vehicles with great safety.

While the present invention has been described in connection with certain exemplary embodiments, it is to be understood that the invention is not limited to the disclosed embodiments, but, on the contrary, is intended to cover various modificaions and equivalent arrangements included within the spirit and scope of the appended claims, and equivalents thereof.

## Claims

1. A mobile security system for use in a vehicle, comprising:
a mobile phone, which comprises a processor for generating an authentification, and a coupling connector; and
an engine immobilization circuitry operatively coupled to an engine of the vehicle, said engine immobilization circuitry being operative to receive the authentification transmitted by the coupling connector, and the authentification disables the engine immobilization circuitry to start the vehicle.

2. The mobile security system of claim 1, wherein the system further comprises a stay-in-place device to place the mobile phone.

3. The mobile security system of claim 2, wherein the stay-in-place device comprises a wireless charging device coupled to the mobile phone.

4. The mobile security system of claim 3, wherein the stay-in-place device comprises a pair of clamps located at two sides of the stay-in-place device to fix the mobile phone.

5. The mobile security system of claim 4, wherein the processor of the mobile phone generates the authentification after the mobile phone is secured by the clamps of the stay-in-place device.

6. The mobile security system of claim 1, further comprising a crash notification sensor in the mobile phone, the vehicle or in a stay-in-place device for generating an activation signal to activate the mobile phone executing at least one preprogrammed emergency function.

7. The mobile security system of claim 6, wherein the preprogrammed emergency function is dialing a preprogrammed emergency telephone number, transmitting an emergency message to an emergency service provider, or recording audio, still images and video.

8. The mobile security system of claim 1, wherein the mobile phone further comprises a g-sensor connected to the processor for generating an activation signal to activate the mobile phone executing at least one preprogrammed emergency function.

9. The mobile security system of claim 8, wherein the preprogrammed emergency function is dialing a preprogrammed emergency telephone number, transmitting an emergency message to an emergency service provider, or recording audio, still images and video.

10. A method for combining an immobilizer funcion of a vehicle with a mobile phone and automatically initiating a mobile phone emergency function in response to an emergency situation, comprising:
(a) securing a mobile phone in the vehicle;
(b) generating an authentification by the mobile phone;
(c) transmitting the authentification to disable an engine immobilization circuitry which operatively coupled to the engine of the vehicle;
(d) starting the vehicle;
(e) generating an activating signal by a crash notification sensor installed in the vehicle or a g-sensor installed in the mobile phone upon a measured indication of at least one of a predefined impact to the vehicle, an enviromental change or an airbag deployment within the vehicle; and
(f) initiating at least one preprogrammed emergency function of the mobile phone.

11. The method of claim 10, wherein the preprogrammed emergency function is dialing a preprogrammed emergency telephone number, transmiting an emergency message to an emergency service provider, providing a location of the mobile phone to an emergency contact, or recording audio, still images and video.

12. The method of claim 10, further comprising charging the mobile phone after the mobile phone is secured on a placing slot.
